# EUROPÄISCHE PATENTSCHRIFT

(11) **EP 1 874 784 B1**
(45) Veröffentlichungstag und Bekanntmachung des Hinweises auf die Patenterteilung: **26.08.2009**
(21) Anmeldenummer: 06725737.8
(22) Anmeldetag: 12.04.2006
(51) Int. Cl.: C07F 5/05, B01F 17/00

(54) **IONISCHE FLÜSSIGKEIT**
IONIC LIQUID
LIQUIDE IONIQUE

(30) Priorität: 14.04.2005 DE 102005017269
(43) Veröffentlichungstag der Anmeldung: 09.01.2008
(73) Patentinhaber: Universität Bremen, 28359 Bremen (DE)
(72) Erfinder: GABEL, Detlef, 28357 Bremen (DE); JUSTUS, Eugen, 28325 Bremen (DE)
(74) Vertreter: Stilkenböhmer, Uwe Michael
(86) Internationale Anmeldenummer: PCT/EP2006/061561
(87) Internationale Veröffentlichungsnummer: WO 2006/108862

(56) Entgegenhaltungen:
- WO-A2-02/42367
- SU-A- 1 836 504
- DATABASE CA [Online] CHEMICAL ABSTRACTS SERVICE, COLUMBUS, OHIO, US; NAKAGAWA, TOSHIO ET AL: "[Mono-, bis-, and tris(monocarboxyalkyl)ammonio]undecahydrod odecabor ates for monoclonal antibody-targeting neutron capture radiotherapy of cancer" XP002391020 gefunden im STN Database accession no. 1991:139122 & JP 02 085291 A2 (JAPAN) 26. März 1990 (1990-03-26)
- DATABASE CA [Online] CHEMICAL ABSTRACTS SERVICE, COLUMBUS, OHIO, US; MISHIMA, YUTAKA ET AL: "Chlorpromazine undecahydrododecaborate or nonahydrodecaborate" XP002391023 gefunden im STN Database accession no. 1976:494374 & JP 50 148364 A2 (SHIONOGI AND CO., LTD., JAPAN) 27. November 1975 (1975-11-27)
- GRUNER, BOHUMIR ET AL: "Synthesis of N- and B-substituted derivatives of closo-amino-undecahydro-dodecaborate(1-) anion" COLLECTION OF CZECHOSLOVAK CHEMICAL COMMUNICATIONS , 62(8), 1185-1204 CODEN: CCCCAK; ISSN: 0010-0765, 1997, XP002391002
- TOLMACHEV V. SJÖBERG, S.: "Polyhedral Boron Compounds as Potential Linkers for Attachment of Radionuclides to Targeting Proteins and Peptides" COLLECT. CZECH COMMUN., Bd. 67, 2002, Seiten 913-935, XP002391003
- SIVAEV, I.B. ET AL.: "Chemistry of closo-Dodecaborate Anion" COLLECT. CZECH COMMUN., Bd. 67, 2002, Seiten 679-727, XP002391004
- DATABASE CA [Online] CHEMICAL ABSTRACTS SERVICE, COLUMBUS, OHIO, US; AGAFONOV, A. V. ET AL: "Synthesis and study of salts of the anion B12H11NEt3-" XP002391022 gefunden im STN Database accession no. 1982:432656 & ZHURNAL NEORGANICHESKOI KHIMII , 27(1), 63-70 CODEN: ZNOKAQ; ISSN: 0044-457X, 1982,
- DATABASE CA [Online] CHEMICAL ABSTRACTS SERVICE, COLUMBUS, OHIO, US; ORLOVA, A. M. ET AL: "Divalent lead complexes with B12H11NEt3- and 1-B10H9SMe2- closo anions" XP002391019 gefunden im STN Database accession no. 1998:278188 & ZHURNAL NEORGANICHESKOI KHIMII , 43(4), 569-572 CODEN: ZNOKAQ; ISSN: 0044-457X, 1998,
- DATABASE CA [Online] CHEMICAL ABSTRACTS SERVICE, COLUMBUS, OHIO, US; MITCHELL, GARY F. ET AL: "The structure of tetramethylammonium undecahydro(triethylamine)[Ih(1 551)-.DELTA.20-closo]dodecaborate(1-)" XP002391021 gefunden im STN Database accession no. 1986:59767 & ACTA CRYSTALLOGRAPHICA, SECTION C: CRYSTAL STRUCTURE COMMUNICATIONS , C42(1), 101-3 CODEN: ACSCEE; ISSN: 0108-2701, 1986,
- PEYMANN T. ; LORK E. ; SCHMIDT M. ; NOTH H. ; GABEL D.: "N-ALKYLATION OF AMMINE-UNDECAHYDRO-CLOSO-DODECABORATE(1-)" CHEMISCHE BERICHTE, Bd. 130, Nr. 6, 1997, Seiten 795-799, XP009069689 in der Anmeldung erwähnt
- MARC GULA: "Borierte Chromophore für die nichtlineare Optik und Untersuchungen zur Oligomerisierung borreicher Phosphoramidite für die Anwendung gegen Krebs" 2003, DISSERTATION , UNIVERSITÄT BREMEN , XP002391005 in der Anmeldung erwähnt Seiten 36,42; Verbindung 23

## Beschreibung

Die vorliegende Erfindung betrifft eine ionische Flüssigkeit, d. h. ein Salz, welches bei einer Temperatur unter 100 ºC (bei einem Druck von 1013 hPa) schmilzt.

Ionische Flüssigkeiten stellen eine recht neuartige Klasse von Lösungsmitteln mit nichtmolekularem, ionischem Charakter dar. Sie sind bereits bei niedrigen Temperaturen (< 100 ºC) flüssig und relativ niedrig viskos.

Ionische Flüssigkeiten können für eine Vielzahl von Zwecken verwendet werden, von denen nachfolgend nur einige aufgezählt sind. Ionische Flüssigkeiten können insbesondere eingesetzt werden als:
- alternative Lösungsmittel für synthetische und katalytische Verfahren, z. B. für Friedel-Crafts-Acylierungen und -Alkylierungen, Diels-Alder-Cycloadditions-Reaktionen, Hydrierungen, Oxidationsreaktionen und Heckreaktionen;
- nicht-wässrige, polare Ersatzstoffe für zweiphasige Systeme;
- Medien für die Heterogenisierung homogener Katalysatoren (indem diese in einer nicht-mischbaren Phase immobilisiert werden);
- Elektrolyte für elektrochemische Zwecke;
- thermische Energiespeichermedien.

Die Literatur zur ionischen Flüssigkeiten ist sehr umfangreich. Eine gute Übersicht über den Stand der Forschung geben z. B. Peter Wasserscheid und Wilhelm Keim in "Ionische Flüssigkeiten - neue "Lösungen" für die Übergangsmetallanalyse", Angew. Chem. 2000, 112, 3926-3945. Dort werden auch umfangreiche weitere Literaturhinweise gegeben.

Trotz einer inzwischen sehr hohen Zahl synthetisierter bzw. als synthetisierbar bekannter bzw. vorgeschlagener ionischer Flüssigkeiten besteht angesichts der Vielfalt potentieller Einsatzfelder auch weiterhin ein hoher Bedarf an neuen ionischen Flüssigkeiten mit besonderen, für bestimmte Einsatzfelder maßgeschneiderten Eigenschaften.

Es war daher die Aufgabe der vorliegenden Erfindung, neue ionische Flüssigkeiten anzugeben.

Diese Aufgabe wird erfindungsgemäß gelöst durch Angabe eines Salzes mit einem Schmelzpunkt von unter 100 ºC bei 1013 hPa (Ionische Flüssigkeit), umfassend ein Kation sowie ein Anion der Formel 1 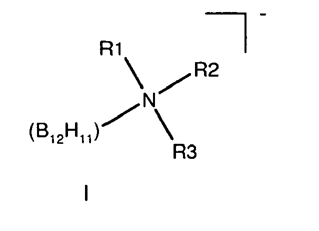 wobei
- (B₁₂H₁₁): einen Cluster mit 12 B-Atomen und 11 H-Atomen bedeutet, wobei ein oder mehrere H-Atome gegebenenfalls durch Halogen ersetzt sind und der Cluster über ein B-Atom mit dem Stickstoffatom verbunden ist,
- R¹, R², R³: unabhängig voneinander ausgewählt sind aus der Gruppe bestehend aus: Wasserstoff, unverzweigtes oder verzweigtes, gegebenenfalls substituiertes, insbesondere halogensubstituiertes Alkyl mit 1-20 C- Atomen, gegebenenfalls substituiertes, insbesondere halogensubstituiertes Alkylaryl mit 6-20 C-Atomen und gegebenenfalls substituiertes, insbesondere halogensubstituiertes Aralkyl mit 6-20 C-Atomen.

Die Erfindung beruht auf der überraschenden Erkenntnis, dass es möglich ist, ionische Flüssigkeiten herzustellen, die als Anion ein einfach negativ geladenes Ammonioclosododecaborat enthalten. Das Ammonio-Stickstoffatom trägt dabei drei Reste, die bei einer Synthese ausgehend insbesondere von Ammonioundecahydro-closo-dodecaborat B₁₂H₁₁NH₃ in weiten Grenzen variiert werden können (auch unabhängig voneinander), siehe dazu weiter unten im Detail.

In den bislang bekannten ionischen Flüssigkeiten sind die Anionen von zumeist relativ einfacher Struktur. Typisch sind zum Beispiel Anionen wie Hexafluorophosphat, Borhydrid, Nitrat, Sulfat, Trifluoroacetat, Bis(trifluorosulfonyl)imid usw. In ionischen Flüssigkeiten mit relativ einfach strukturierten Anionen wird eine Variation der Eigenschaften regelmäßig nur bzw. vornehmlich über eine Variation der Subtituenten (insbesondere Seitenketten) im Kation erreicht. Eine Variation der Substituenten in den Anionen wurde üblicherweise nicht in Betracht gezogen. Es gibt nur wenige Hinweise in der Literatur, wonach Variationen in den Eigenschaften ionischer Flüssigkeiten über die Variation der im Salz enthaltenen Anionen erreicht wurden; diese Hinweise betreffen zum Beispiel Alkylsulfate, Borsäureester und Borsäureanhydride, sowie Tetraalkylboranate (H. Braunschweig, G. D'Andola, T. Welton, Euroboron 3, 12.-16.9.2004, Poster P13). Letztere sind sehr oxidationsempfindlich.

Im Unterschied zu der üblichen Vorgehensweise nach dem Stand der Technik wird im Rahmen der vorliegenden Erfindung vorgeschlagen, die Eigenschaften einer erfindungsgemäßen ionischen Flüssigkeit durch gezielte Auswahl und Synthese der mit dem Ammonio-Stickstoff verknüpften Substituenten des Anions für die Zwecke des Einzelfalles maßzuschneidern. Selbstverständlich können im Rahmen der vorliegenden Erfindung auch die Kationen variiert werden, was jeweils zu einer weiteren Modifikation der Eigenschaften führt. Das der Erfindung zugrunde liegende Konzept bietet also die Möglichkeit, sowohl Kation (wie bislang bereits üblich) als auch Anion (wie bislang nur sehr selten praktiziert) gezielt zu modifizieren, um so eine ionische Flüssigkeit, welche einen Boranat-Cluster im Anion enthält, für ihren Einsatz zu optimieren.

Toralf Peymann et al. haben bereits in der Veröffentlichung Chem. Ber. 1997, 130, 795-799 Salze offenbart, welche ein Anion der Formel I enthalten. Die im Einzelnen beschriebenen Verbindungen besitzen jedoch Schmelzpunkte im Bereich von 184-226 ºC und sind somit keine ionischen Flüssigkeiten. Es sei zudem auf die folgenden Dokumente verwiesen: Chem. Ber. 1997, 130, 795 - 799, Dissertation Uni Bremen 2003, (Marc Gula) "Borierte Chromphore für die nichtlineare Optik und Untersuchungen zur Oligomerisierung borreicher Phosphoramidite für die Anwendung gegen Krebs".

Im Rahmen der vorliegenden Erfindung wurde erkannt, dass bei geeigneter Auswahl des eingesetzten Kations und der am Stickstoffatom des erfindungsgemäß zu verwendenden Anions vorhandenen Reste R¹, R², R³ ionische Flüssigkeiten mit interessanten Eigenschaften erhalten werden. Für ein gegebenes Kation hängt beispielsweise der Schmelzpunkt eines gegebenen Salzes mit einem Anion der Formel 1, in dem sämtliche Reste R¹, R², R³ identische unverzweigte Alkyle sind, direkt von der Kettenlänge der jeweiligen Alkylreste ab. Mit zunehmender Kettenlänge sinkt der Schmelzpunkt, vergleiche hierzu die Beispiele unten. Ähnliche Struktur-Schmelzpunkt-Beziehungen gelten auch für andere Salze mit Anionen der Formel 1; der Fachmann wird anhand weniger Vorversuche ermitteln können, bei welchen Salzen mit einem Anion der Formel I es sich um eine ionische Flüssigkeit handelt und bei welchen es sich im Gegensatz dazu um ein höher schmelzendes Salz (Salz mit einem Schmelzpunkt gleich oder größer 100 ºC) handelt. Der Übergang vom Triethylammonio-Substituenten zum Trihexylammonio-Substituenten am Cluster erniedrigt z. B. den Schmelzpunkt der Tetrabutylammoniumsalze von 194°C (Peymann et al., Chem. Ber. 1997, 130, 795-799) um etwa 120 °C auf 75-78 ºC. Der Austausch des Kations von Tetramethylammonium zu Tetrabutylammonium erniedrigt den Schmelzpunkt des Trihexylammonio-Clusters von 183-186°C auf 75-78°C.

Wenngleich der Fachmann in Kenntnis der vorliegenden Erfindung unter den Salzen mit einem Anion der Formel 1 ohne größeren Aufwand eine Vielzahl ionischer Flüssigkeiten auffinden kann, sind doch einige Salztypen bevorzugt.

So sind in den Anionen der Formel I die Reste R¹, R², R³ in manchen Fällen vorzugsweise identisch und ausgewählt aus der Gruppe bestehend aus unverzweigtes oder verzweigtes, gegebenenfalls substituiertes Alkyl mit 1-20 C-Atomen, vorzugsweise 3-20 C-Atomen, Alkylaryl mit 6-20 C-Atomen und Aralkyl mit 6-20 C-Atomen.

Besonders bevorzugt ist es dabei, wenn sämtliche Reste R¹, R², R³ identisch sind und ausgewählt aus der Gruppe bestehend aus unverzweigtes oder verzweigtes, gegebenenfalls substituiertes Alkyl mit 1-20, vorzugsweise 6-20 C-Atomen, bevorzugt 6-12 C-Atomen.

Alternativ dazu sind die Reste R¹, R² und R³ in manchen Fällen vorzugsweise nicht sämtlich identisch, wobei R³ vorzugsweise Methyl oder Benzyl ist. Es versteht sich, dass in diesem Falle die Reste R¹ und R² von maßgeblicher Bedeutung dafür sind, dass das jeweilige Salz, welches ein Anion der Formel enthält, eine ionische Flüssigkeit ist. Selbstverständlich hat aber auch wiederum das im Salz enthaltene Kation einen erheblichen Einfluss auf die Salz-Eigenschaften.

In einem erfindungsgemäßen Salz (ionische Flüssigkeit) ist das Kation vorzugsweise ausgewählt aus der Gruppe bestehend aus gegebenenfalls ein-oder mehrfach mit organischen Resten substituierten (a) quartären Ammonium-Kationen wie Imidazolium, Pyridinium und Ammonium, (b) Phosphonium-Kationen, (c) Alkali-Kationen sowie (d) (gegebenenfalls solvatisierten) Protonen (H⁺).

Wiederum bevorzugt sind bei den Kationen der Gruppe (a) solche, die ausgewählt sind aus der Gruppe bestehend aus N, N'-substituiertem Imidazolium, N-substituiertem Pyridinium und Tetraalkylammonium. Im Tetraalkylammonium können die Alkylgruppen dabei gleich oder unterschiedlich sein.

Aus der Gruppe (c) der Alkali-Kationen ist Lithium besonders bevorzugt; die resultierenden Salze zeichnen sich insbesondere durch eine vergleichsweise niedrige Viskosität aus.

Ein erfindungsgemäßes Verfahren zur Herstellung eines erfindungsgemäßen Salzes (einer ionischen Flüssigkeit) umfasst die folgenden Schritte:
- Bereitstellen eines Salzes, welches das Ammonioundecahydro-closo-dodecaborat-anion umfasst
- Substituieren von ein, zwei oder drei an Stickstoff gebundenen Wasserstoffatomen des Ammonioundecahydro-closo-dodecaborat-anions durch Umsetzen dieses Anions mit einer einzelnen oder unterschiedlichen Verbindungen der Formel R-X, wobei

R jeweils ausgewählt ist aus der Gruppe bestehend aus: unverzweigtes oder verzweigtes, gegebenenfalls substituiertes Alkyl mit 1-20 C-Atomen, Alkylaryl mit 6-20 C-Atomen und Aralkyl mit 6-20 C-Atomen.
und
X eine geeignete Abgangsgruppe ist.

Hierbei ist X vorzugsweise ausgewählt aus der Gruppe bestehend aus Br, Cl, I, Toluolsulfonyl, Trifluormethylsulfonyl, Sulfat.

Das Kation im Salz des Ammonioundecahydro-closo-dodecaborat-Anions ist vorzugsweise ein Alkali-Kation, besonders bevorzugt Lithium. Das Kation kann gegen ein anderes Kation ausgetauscht werden, zum Beispiel ein Alkali-Kation gegen ein Kation der Gruppen (a), (b) oder (d).

Ist das zur Synthese eingesetzte Kation ein Alkali-lon (zum Beispiel Kalium) und soll dieses gegen ein anderes (gewünschtes) Kation (zum Beispiel das bevorzugte Lithium) ausgetauscht werden, so gelingt dies regelmäßig nach einem der folgenden, dem Fachmann geläufigen Verfahren: Ionenaustausch zu H⁺ und nachfolgende Neutralisation mit dem Hydroxid des gewünschten Kations; Metathese mit einem geeigneten Salz des gewünschten Kations in einem geeigneten organischen Lösungsmittel (es fällt dann das Alkali-Salz des Gegenions des anderen (gewünschten) Kations aus); Extraktion aus einer wässrigen Lösung in ein geeignetes organisches Lösungsmittel in der Gegenwart des gewünschten Kations; bei Alkylkettenlängen von C₁ bis C₆ kann der Austausch des Kalium-Kations gegen ein anderes (gewünschtes) Kation zum Beispiel in Wasser durchgeführt werden, wobei das gewünschte Salz des substituierten Ammonioundecahydro-closo-dodecaborats ausfällt, sofern als anderes (gewünschtes) Kation eines aus den Gruppen (a) und (b) eingesetzt wird. ,

Die Erfindung umfasst und betrifft wie erwähnt auch die Verwendung von H⁺ (nackt oder solvatisiert) als Kation; derartige Verbindungen werden nach Ionenaustausch entsprechend dem oben gegebenen Beispiel erhalten.

Die Erfindung betrifft auch die Verwendung eines Anions der Formel 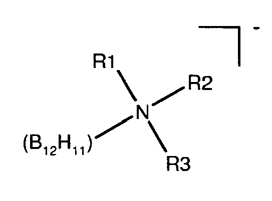 wobei
- (B₁₂H₁₁): einen Cluster mit 12 B-Atomen und 11 H-Atomen bedeutet, wobei ein oder mehrere H-Atome gegebenenfalls durch Halogen ersetzt sind und der Cluster über ein B-Atom mit dem Stickstoffatom verbunden ist und
- R¹, R², R³: unabhängig voneinander ausgewählt sind aus der Gruppe bestehend aus Wasserstoff, unverzweigtes oder verzweigtes, gegebenenfalls substituiertes, insbesondere halogensubstituiertes Alkyl mit 1-20 C- Atomen, gegebenenfalls substituiertes, insbesondere halogensubstituiertes Alkylaryl mit 6-20 C-Atomen und gegebenenfalls substituiertes, insbesondere halogensubstituiertes Aralkyl mit 6-20 C-Atomen
als Anion eines Salzes mit einem Schmelzpunkt von unter 100°C bei 1013 hPa (Ionische Flüssigkeit).

Zudem betrifft die Erfindung die Verwendung eines Salzes, welches Ammonioundecahydro-closo-dodecaborat-anionen (Verbindung 3 aus der bereits zitierten Veröffentlichung in Chem. Ber. 1997, 130, 795-799) umfasst, zur Herstellung eines Salzes mit einem Schmelzpunkt von unter 100°C bei 1013 hPa (Ionische Flüssigkeit).

Schließlich betrifft die vorliegende Erfindung auch Mischungen unterschiedlicher Salze. Diese Mischungen umfassen ein oder mehrere erfindungsgemäße Salze (wie oben definiert), wobei die erfindungsgemäße Mischung einen Schmelzpunkt von unter 100 ºC bei 1013 hPa besitzt. Diese Mischung unterschiedlicher Salze stellt für sich eine ionische Flüssigkeit dar, unabhängig davon, ob sämtliche oder nur einige der in der Mischung enthaltenen unterschiedlichen Salze für sich betrachtet in jeweils reiner Form bereits ionische Flüssigkeiten sind oder nicht.

Die erfindungsgemäßen Salze besitzen eine Reihe interessanter spezifischer Eigenschaften wie insbesondere eine hohe Elektronegativität, eine besondere geometrische Form, eine hohe thermische Stabilität und geringe chemische Reaktivität. Die durch den Cluster vermittelten Eigenschaften der über mehrere Atome verteilten negativen Ladung und des hohen induktiven Effekts erlauben andere Wechselwirkungen mit Ionen und Dipolen als Anionen, in denen die negative Ladung auf wenige oder ein Atom verteilt ist. Die hohe Symmetrie des Clusters führt zu anderen Wechselwirkungen als für weniger symmetrische Anionen. Die thermische Stabilität des Clusters ist sehr hoch, auch in der Gegenwart von Sauerstoff. Der Cluster zeigt nur geringe Neigungen, chemische Reaktionen einzugehen. Dem Fachmann ist aus der Literatur bekannt, dass die Herstellung halogenierter Cluster möglich ist, und dass die elektrochemische Stabilität des halogenierten Clusters noch größer ist als die des nichthalogenierten Clusters. Die Einführung von Fluor kann z.B. durch Umsetzung mit HF und/oder F₂ erfolgen, die von Chlor durch Reaktion mit Cl₂ oder Umsetzung mit N-Chlorsuccinimid. (s. z.B. Ivanov, S. V.; Davis, J. A.; Miller, S. M.; Anderson, O. P., and Strauss, S. H. Inorg Chem. 2003; 42:4489-91). Die vorliegende Erfindung umfasst auch derartige Derivate, in denen (soweit chemisch möglich) ein oder mehrere oder sämtliche H-Atome des Clusters gegen ein Halogenatom ausgetauscht sind, sowie Mischungen von Verbindungen, die sich in ihrem Halogenierungsgrad unterscheiden.

Besondere Vorteile der erfindungsgemäßen ionischen Flüssigkeiten sind insbesondere die folgenden:
- niedrige Korrosivität
- hohe hydrolytische und solvolytische Stabilität
- hohe chemische Beständigkeit
- hohe thermische Beständigkeit
- niedrige Viskosität

Nachfolgend wird die Erfindung anhand von Beispielen näher erläutert:

### Beispiele:

### Beispiel 1:

### Darstellung von N,N,N-Tridodecylammonioclosododecaborat (1-) Tetrabutylammoniumsalz (Beispielsynthese)

322 mg (1 mMol) Ammonioundecahydro-closo-dodecaborat, Tetrabutylammoniumsalz werden bei Raumtemperatur in 10 ml trockenem Dimethylsulfoxid gelöst. Zu dieser Lösung werden 28 mg (5 mMol) KOH gegeben. Dann werden 1,92 ml (8 mMol) 1-Dodecylbromid dazu getropft. Die Mischung lässt man 24 Stunden bei Raumtemperatur rühren und anschließend wird das Dimethylsulfoxid im Ölpumpenvakuum abdestilliert. Der verbleibende Rückstand wird in Ethylacetat gelöst und ausgefallenes KBr abfiltriert. Danach wird das Ethylacetat entfernt und der Rückstand säulenchromatographisch gereinigt (Eluent Diethylether: Ethylacetat 2:1). Ausbeute: 812 mg (90 %).

¹H-NMR (CDCl₃, ppm): 0,86-0,92 (t., 9H, CH₃-(CH₂)₁₁-); 0,98-1,05 (t., 12H, CH₃-(CH₂)₃-); 1,26 (s., 54H, CH₃-CH₂-(CH₂)₉-CH₂-); 1,38-1,55 (m., 8H, CH₃-CH₂-(CH₂)₂-); 1,56-1,71 (m., 8H, CH₃-CH₂-CH₂-CH₂-); 1,72-1,92 (m., 6H, CH₃-CH₂-(CH₂)₁₀-); 2,99-3,26 (m., 14H, -CH₂-N)

### MS (ESI): positiv m/z 242; negativ m/z 663 (höchster Peak eines Bor-Isotopenmusters)

### Beispiel 2:

### Allgemeine Darstellung von N,N,N-Trialkylammonioundecahydro-closo-dodecaborat (1⁻) Kaliumsalzen

196,6 mg (1 mMol) Ammonioundecahydro-closo-dodecaborat Kaliumsalz werden bei Raumtemperatur in 15-20 ml trockenem Acetonitril gelöst. Zu dieser Lösung werden 840 mg (15 mMol) KOH gegeben. Dann wird 3,2 mMol Alkylbromid dazu getropft. Die Mischung lässt man 24 Stunden bei Raumtemperatur rühren und anschließend wird der Rückstand (KBr und Überschuß von KOH) abfiltriert. Danach wird das Lösungsmittel entfernt und der Rückstand bei den Alkylkettenlänge C₁ bis C₅ aus Diethylether umkristallisiert, bei C₆ und C₁₂ säulenchromatographisch gereinigt (Eluent Diethylether:Ethylacetat 2:1). Ausbeute: 80-90%.

### Beispielanalyse:

Kaliumsalz von N,N,N-Tridodecylammonioundecahydro-closo-dodecaborat (1-) ¹H-NMR (CDCl₃, ppm): 0,89(t, 9H, CH₃-(CH₂)₁₁-); 1,26 (s, 54H, CH₃-CH₂-(CH₂)₉-CH₂-), 1,72-1,92 (m, 6H, CH₃-CH₂-(CH₂)₁₀-); 3,06 (m, 6H, -CH₂-N); 0,2-2,3 (m, 11H,B-H).

### MS (ESI) positiv m/z 39; negativ m/z 663 (höchster Peak eines Bor-Isotopenmusters)

### Beispiel 3:

### Austausch des Kaliumkations von N,N,N-Trialkylammonioundecahydro-closo-dodecaborat (1-) gegen andere Kationen (Tetramethylammonium, Tetrabutylammonium, N-Methyl-N-Butyl-Immidazolium, N-Hexyl-Pyridinium).

Den Austausch des Kaliumkations gegen ein anderes Kation kann man bei einer Alkylkettenlänge von C₁, bis C₆ zum Beispiel in Wasser, bei der C₁₂ Alkylkette zum Beispiel in einer Mischung von Ethylacetat-Methanol durchführen. Dabei fällt in Wasser das gewünschte Salz des substituierten Ammonioundecahydro-closo-dodecaborat aus, in organischen Lösungsmitteln das Kaliumsalz des Gegenions des anderen, zum Beispiel organischen Kations.

### Beispiel 3.1:

### Darstellung von N,N,N-Tridodecylammonioundecahydro-closo-dodecaborat (1-) Tetrabutylammoniumsalz

Man löst das Kaliumsalz von N,N,N,-Tridodecylammonioundecahydro-closo-dodecaborat in Ethylacetat und tropft dazu eine Losung von 1 Äquivalent Tetrabutylammoniumbromid. Es fällt KBr aus, welches man abfiltriert. Danach wird das Lösungsmittel entfernt und der Rückstand säulenchromatographisch gereinigt (Eluent Diethylether:Ethylacetat 2:1). Ausbeute: 90-95%.

¹H-NMR (CDCl₃, ppm): 0,87 (t, 9H, CH₃-(CH₂)₁₁-); 0,99 (t, 12H, CH₃-(CH₂)₃-), 1,24 (s, 54H, CH₃-CH₂-(CH₂)g-CH₂, 1,38-1,55 (m, 8H, CH₃-CH₂-(CH₂)₂-); 1,56-1,71(m, 8H, CH₃-CH₂-CH₂-CH₂-); 1,72-1,92 (m, 6H, CH₃-CH₂CH₂)₁₀-); 3,06 (m, 6H, -CH₂-N); 3,19-3,27 (m, 8H, N-CH₂); 0,2-2,3 (m, 11 H, B-H).

### MS (ESI). positiv m/z 242; negativ m/z 663 (höchster Peak eines Bor-Isotopenmusters)

### Beispiel 3.2:

In weiteren Beispiel-Synthesen wurde ebenfalls der B₁₂H₁₁ NH₃-Cluster mit Alkylhalogeniden zum Trialkylammonioderivat umgesetzt. Als Kationen wurden alternativ Tetramethylammonium, Tetrabutylammonium sowie weitere Kationen verwendet.

### Beispiel 3.3:

### Darstellung von N,N-Bis(dodecyl)-N-methylammonioundecahydro-closo-dodecaborat (1-) Tetramethylammoniumsalz

Eine Mischung 8.9 g (40 mmol) von Na₂B₁₂H₁₂·2H₂O (1), 30.5 g (240mmol) von N-Methylhydroxylamin-O-sulfonsäure und 100 ml Wasser werden über Nacht refluxiert. Danach wird diese Mischung abgekühlt und mit einer wässrigen Lösung von 8.76 g (80mmol) Tetramethylammoniumchlorid übergegossen. Der ausgefallene Niederschlag wird abfiltriert und anschließend an der Luft getrocknet. Der Niederschlag (unreagierter B₁₂H₁₂²⁻-Cluster als Tetramethylammoniumsalz) wird in 200 ml heißem Acetonitril suspendiert und abfiltriert. Acetonitril wird abgezogen und der weisse Rückstand an der Luft getrocknet. Ausbeute 4.81 g (49%). ¹H-NMR(CD₃CN, δ, ppm): 4,62-5.18 (m, 2H, NH₂-CH₃); 3.07 (s, 12H, (CH₃)₄N); 2.44 (t, 3H, J=3.01 Hz, CH₃ -NH₂); -0.18-2.42 (m, 11 H, BH). MS (ESI, Acetonitril, m/z) positiv 74 (Kat⁺), 320 (A⁻+2Kat+), 566(2A-+3Kat⁺); negativ 172 (A⁻), 417 (2A⁻+Kat⁺).

0.246 g (1.0 mmol) N-Methylammonioundecahydro-closo-dodecaborat (1-) Tetramethylammoniumsalz werden bei Raumtemperatur in 15-20 ml trockenem Acetonitril gelöst. Zu dieser Lösung werden 0.84 g (15.0 mmol) KOH als Pulver gegeben. Danach werden 3.0 mmol Alkylbromid dazu getropft. Die Mischung lässt man 24 Stunden bei Raumtemperatur rühren und anschließend wird Rückstand (ausgefallenes KBr und Überschuss von KOH) abfiltriert. Das Lösungsmittel wird entfernt und der Rückstand aus Diethylether kristallisiert.

### Beispiel 3.4

### Darstellung von N-Benzyl-N,N-diethylammonioundecahydro-closo-dodecaborat (1-) Tetrabutylammoniumsalz

0.20 g (0.41 mmol) des N-Benzylammonioundecahydro-closo-dodecaborat (1-) Tetrabutylammoniumsalzes, hergestellt nach Literatur (Sivaev, I. B.; Bruskin, A. B.; Nesterov, V. V.; Antipin, M. Y.; Bregadze, V. I., and Sjöberg, S. Inorg. Chem. 1999; 38:5887-5893.), 0.23g (4.10 mmol) pulverisiertes KOH und 0.27 g (2.46 mmol) Ethylbromid werden bei Raumtemperatur in 5 ml Acetonitril über Nacht gerührt. Der Niederschlag (KBr und überschüssiges KOH) wird abfiltriert und das Lösungsmittel abgezogen. Das entstandene gelbe Öl wird mit Diethylether zu einem beigeweißen Pulver umkristallisiert. Ausbeute ist 0.21 g (94%). T_{schmelzen}= 122 ºC. IR (KBr, □ cm ⁻¹) 2965, 2937, 2876 (C-H); 2491 (B-H); 1472 (Aromat). ¹H-NMR (CD₃CN, □, ppm): 7.37-7.51 (m, 5H CH_{Ar}); 4.66 (s, 2H, N-CH₂-Ph); 3.37 (q, 4H, J=5.5 Hz, N-CH₂-CH₃); 3.03-3.12 (m, 8H, N-CH₂-CH₂); 1.52-1.67 (m, 8H, N-CH₂-CH₂-CH₂-); 1.25-1.44 (m, 8H CH₃-CH-CH₂-); 1.14 (t, 6H, J=4.0 Hz, CH₃-CH₂-); 0.97 (t, 9H, J=3,5 Hz, CH₃-CH₂-CH₂-); 0.0-2.8 (m, 11H, BH). ¹³C-NMR (CD₃CN, □, ppm): 11.28, 13.22, 19.73, 23.72, 54.52, 58.76, 67.97, 128.89, 129.17, 129.37, 133.22. ¹¹B-NMR (CD₃CN, □, ppm): -7.52, -11.02. MS (ESI, Acetonitril, m/z) positiv 242 (Kat⁺); negativ 304 (A).

### Beispiel 4:

### Schmelzpunkte erfindungsgemäßer ionischer Flüssigkeiten:

Für ausgewählte erfindungsgemäße ionische Flüssigkeiten wurden die Schmelzpunkte bestimmt. Die Ergebnisse sind der nachfolgenden Tabelle zu entnehmen, die zum Vergleich auch Schmelzpunkte höherschmelzender Salze umfasst.

**Tabelle 1:**

| Schmelzpunkte ausgewählter erfindungsgemäßer ionischer Flüssigkeiten sowie nicht-erfindungsgemäßer höherschmelzender Salze. | | | | | | | |
|---|---|---|---|---|---|---|---|
| | N-Hexyl-pyridinium | Tetrabutyl-ammonium | N-methyl-N'-butyl-imidazolium | Tetrameth yl-ammonium | Kalium | Lithium | H⁺ |
| B₁₂H₁₁N H₃ | 128-129°C | 188-190°C | 213-215°C | >250°C | | | |
| B₁₂H₁₁N (CH₃)₃ | 165-166°C | | | | | | |
| B₁₂H₁₁N (C₂H₅)₃ | 130-132°C | 194°C (a) | 128-130°C | 314°C (b) | | | |
| B₁₂H₁₁N (C₃H₇)₃ | 126-128°C | 172-174°C | 143-145°C | 256-258°C | | | |
| B₁₂H₁₁N (C₄H₉)₃ | ca. 40-50°C | 175-176°C | 115-116°C | 222-225°C | | | |
| B₁₂H₁₁N (i-C₅H₁₁)₃ | <25°C | 112-114°C | 87-90°C | | | | |
| B₁₂H₁₁N (C₆H₁₃)₃ | <25°C | 75-78°C | 95-97°C | 183-186°C | ca. 65°C | ca. 70 °C | ca. 80°C |
| B₁₂H₁₁N H (C₁₂H₂₅) 2 | | 72-74°C | 58-62°C | 135-140°C | | | |
| B₁₂H₁₁N (C₁₂H₂₅) 3 | <25°C | ca. 40-45°C | <25°C | ca. 60°C | ca. 40°C | | |
| B₁₂H₁₁ N CH₃(C₁₂ H₂₅)₂ | | | | 65-70 °C | | | |
| B₁₂H₁₁N CH₂C₆H 5 (C₂H₅)₂ | | 122 | | | | | |

| | | | | | | | |
|---|---|---|---|---|---|---|---|
| (a): Peymann et al., Chem. Ber. 130,795-799, 1997 (b) Agafonov, A. V. Butman, L. A. Solntsev, K. A. Vinokurov, A. A. Zhukova, N. A. Kuznetsov, N. T. Zh. Neorg. Khim. 27, 63-70, 1982. | | | | | | | |

## Patentansprüche

1. Salz mit einem Schmelzpunkt von unter 100°C bei 1013 hPa (Ionische Flüssigkeit),
umfassend ein Kation
sowie ein Anion der Formel 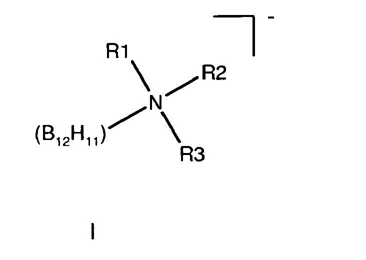 wobei
(B₁₂H₁₁) einen Cluster mit 12 B-Atomen und 11 H-Atomen bedeutet, wobei ein oder mehrere H-Atome gegenebenenfalls durch Halogen ersetzt sind und der Cluster über ein B-Atom mit dem Stickstoffatom verbunden ist,
R¹, R², R³ unabhängig voneinander ausgewählt sind aus der Gruppe bestehend aus: Wasserstoff, unverzweigtes oder verzweigtes, gegebenenfalls substituiertes, insbesondere halogensubstituiertes Alkyl mit 1-20 C- Atomen, gegebenenfalls substituiertes, insbesondere halogensubstituiertes Alkylaryl mit 6-20C-Atomen und gegebenenfalls substituiertes, insbesondere halogensubstituiertes Aralkyl mit 6-20 C-Atomen.

2. Salz nach Anspruch 1, wobei
R¹, R², R³ identisch sind und ausgewählt aus der Gruppe bestehend aus unverzweigtes oder verzweigtes, gegebenenfalls substituiertes Alkyl mit 1-20 C-Atomen, Alkylaryl mit 6-20 C-Atomen und Aralkyl mit 6-20 C-Atomen.

3. Salz nach Anspruch 2, wobei
R¹, R², R³ identisch sind und ausgewählt aus der Gruppe bestehend aus unverzweigtes oder verzweigtes, gegebenenfalls substituiertes Alkyl mit 1-20, vorzugsweise 6-12 C-Atomen.

4. Salz nach Anspruch 1, wobei
R³ Methyl oder Benzyl und R¹, R² unverzweigtes oder verzweigtes, gegebenenfalls substituiertes Alkyl mit 2-20 C-Atomen ist.

5. Salz nach einem der vorangehenden Ansprüche, wobei das Kation ausgewählt ist aus der Gruppe bestehend aus gegebenenfalls ein- oder mehrfach mit organischen Resten substituierten (a) quartären Ammonium-Kationen wie Imidazolium, Pyridinium und Ammonium, (b) Phosphonium-Kationen, (c) Alkali-Kationen sowie (d) gegebenenfalls solvatisierten Protonen.

6. Salz nach Anspruch 5, wobei das Kation ausgewählt ist aus der Gruppe bestehend aus N, N'-substituiertem Imidazolium, N-substituiertem Pyridinium und Tetraalkylammonium.

7. Verfahren zur Herstellung eines Salzes nach einem der vorangehenden Ansprüche, mit folgenden Schritten:
- Bereitstellen eines Salzes, welches das Ammonioundecahydro-closo-dodecaborat-anion umfasst
- Substituieren von ein, zwei oder drei an Stickstoff gebundenen Wasserstoffatomen des Ammonioundecahydro-closo-dodecaborat-anions durch Umsetzen dieses Anions mit einer einzelnen oder unterschiedlichen Verbindungen der Formel R-X, wobei
R jeweils ausgewählt ist aus der Gruppe bestehend aus: unverzweigtes oder verzweigtes, gegebenenfalls substituiertes Alkyl mit 1-20 C-Atomen, Alkylaryl mit 6-20 C-Atomen und Aralkyl mit 6-20 C-Atomen
und
X eine geeignete Abgangsgruppe ist.

8. Verfahren nach Anspruch 7, wobei X ausgewählt ist aus der Gruppe bestehend aus Br, Cl, I, Toluolsulfonyl, Trifluormethylsulfonyl, Sulfat.

9. Verfahren nach Anspruch 7 oder 8, wobei das Kation im Salz des Ammonioundecahydro-closo-dodecaborat-Anions ein Alkali-Kation ist.

10. Verwendung eines Anions der Formel I 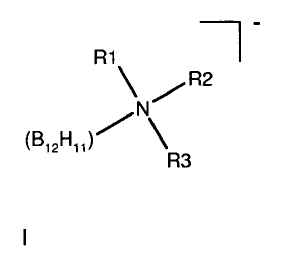 wobei
(B₁₂H₁₁) einen Cluster mit 12 B-Atomen und 11 H-Atomen bedeutet, wobei ein oder mehrere H-Atome gegebenenfalls durch Halogen ersetzt sind und der Cluster über ein B-Atom mit dem Stickstoffatom verbunden ist und
R¹, R², R³ unabhängig voneinander ausgewählt sind aus der Gruppe bestehend aus Wasserstoff, unverzweigtes oder verzweigtes, gegebenenfalls substituiertes, insbesondere halogensubstituiertes Alkyl mit 1-20 C-Atomen, gegebenenfalls substituiertes, insbesondere halogensubstituiertes Alkylaryl mit 6-20 C-Atomen und gegebenenfalls substituiertes, insbesondere halogensubstituiertes Aralkyl mit mit 6-20 C-Atomen
als Anion eines Salzes mit einem Schmelzpunkt von unter 100°C bei 1013 hPa (Ionische Flüssigkeit).

11. Verwendung eines Salzes, welches Ammonioundecahydro-closo-dodecaborat-anionen umfasst, zur Herstellung eines Salzes mit einem Schmelzpunkt von unter 100°C bei 1013 hPa (Ionische Flüssigkeit).

12. Mischung unterschiedlicher Salze, umfassend ein oder mehrere Salze nach einem der Ansprüche 1-6, wobei die Mischung einen Schmelzpunkt von unter 100°C bei 1013 hPa besitzt.

## Claims

1. Salt having a melting point of below 100°C under 1,013 hPa (ionic liquid),
comprising a cation
and an anion of the formula I 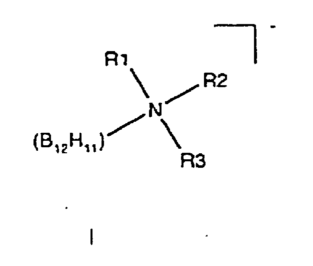 wherein
(B₁₂H₁₁) denotes a cluster with 12 B atoms and 11 H atoms, wherein one or more H atoms are optionally replaced by halogen and the cluster is bonded to the nitrogen atom via a B atom,
R¹, R² R³ independently of one another are chosen from the group consisting of: hydrogen, unbranched or branched, optionally substituted, in particular halogen-substituted alkyl having 1-20 C atoms, optionally substituted, in particular halogen- substituted alkylaryl having 6-20 C atoms and optionally substituted, in particular halogen- substituted aralkyl having 6-20 C atoms.

2. Salt according to claim 1, wherein
R¹, R², R³ are identical and are chosen from the group consisting of unbranched or branched, optionally substituted alkyl having 1-20 C atoms, alkylaryl having 6-20 C atoms and aralkyl having 6-20 C atoms.

3. Salt according to claim 2, wherein
R¹, R², R³ are identical and are chosen from the group consisting of unbranched or branched, optionally substituted alkyl having 1-20 C atoms, preferably 6-12 C atoms.

4. Salt according to claim 1, wherein
R³ is methyl or benzyl and R¹, R² are unbranched or branched, optionally substituted alkyl having 2- 20 C atoms.

5. Salt according to one of the preceding claims, wherein the cation is chosen from the group consisting of (a) quaternary ammonium cations, such as imidazolium, pyridinium and ammonium, optionally mono- or polysubstituted by organic radicals, (b) phosphonium cations, (c) alkali metal cations and (d) optionally solvated protons.

6. Salt according to claim 5, wherein the cation is chosen from the group consisting of N,N'-substituted imidazolium, N-substituted pyridinium and tetraalkylammonium.

7. Process for the preparation of a salt according to one of the preceding claims, with the following steps:
- provision of a salt which comprises the ammonioundecahydro-closo-dodecaborate anion
- replacement of one, two or three hydrogen atoms of the ammonioundecahydro-closo-dodecaborate anion which are bonded to nitrogen by reaction of this anion with an individual or various compounds of the formula R-X, wherein
R is in each case chosen from the group consisting of: unbranched or branched, optionally substituted alkyl having 1-20 C atoms, alkylaryl having 6-20 C atoms and aralkyl having 6-20 C atoms
and
X is a suitable leaving group.

8. Process according to claim 7, wherein X is chosen from the group consisting of Br, C1, I, toluenesulfonyl, trifluoromethylsulfonyl, sulfate.

9. Process according to claim 7 or 8, wherein the cation in the salt of the ammonioundecahydro-closo-dodecaborate anion is an alkali metal cation.

10. Use of an anion of the formula I 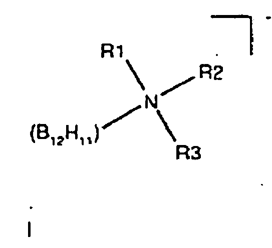 wherein
(B₁₂H₁₁) denotes a cluster with 12 B atoms and 11 H atoms, wherein one or more H atoms are optionally replaced by halogen and the cluster is bonded to the nitrogen atom via a B atom and
R¹, R², R³ independently of one another are chosen from the group consisting of hydrogen, unbranched or branched, optionally substituted, in particular halogen-substituted alkyl having 1-20 C atoms, optionally substituted, in particular halogen-substituted alkylaryl having 6-20 C atoms and optionally substituted, in particular halogen-substituted aralkyl having 6-20 C atoms
as the anion of a salt having a melting point of below 100 °C under 1,013 hPa (ionic liquid).

11. Use of a salt which comprises ammonioundecahydro-closo-dodecaborate anions for the preparation of a salt having a melting point of below 100 °C under 1,013 hPa (ionic liquid).

12. Mixture of various salts comprising one or more salts according to one of claims 1-6, wherein the mixture has a melting point of below 100 °C under 1,013 hPa.

## Revendications

1. Sel ayant un point de fusion inférieur à 100 °C à 1013 hPa (liquide ionique),
comportant un cation
ainsi qu'un anion de formule I 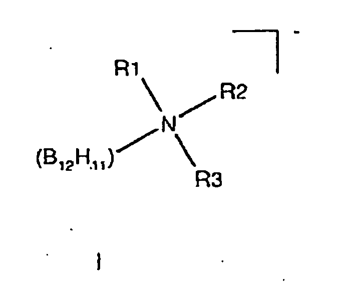 Où (B₁₂H₁₁) désigne un agrégat possédant 12 atomes B et 11 atomes H, un ou plusieurs atomes H sont éventuellement remplacés par l'halogène et l'agrégat est lié à l'atome d'azote par un atome B,
R¹, R², R³ sont choisis indépendamment les uns des autres dans le groupe constitué de : l'hydrogène, l'alkyle linéaire ou ramifié, éventuellement substitué, en particulier substitué par un halogène, possédant 1 à 20 atomes C, l'alkylaryle éventuellement substitué, en particulier substitué par un halogène, possédant 6 à 20 atomes C et l'aralkyle éventuellement substitué, en particulier substitué par un halogène, possédant 6 à 20 atomes C.

2. Sel selon la revendication 1, où
R¹, R², R³ sont identiques et choisis dans le groupe constitué de l'alkyle possédant 1 à 20 atomes C, l'alkylaryle possédant 6 à 20 atomes de carbone et l'aralkyle possédant 6 à 20 atomes C, linéaires ou ramifiés, éventuellement substitués.

3. Sel selon la revendication 2, où
R¹, R², R³ étant identiques et choisis dans le groupe constitué de l'alkyle linéaire ou ramifié, éventuellement substitué possédant 1 à 20, de préférence 6 à 12 atomes C.

4. Sel selon la revendication 1, où
R³ est un méthyle ou un benzyle et R¹, R² est un alkyle linéaire ou ramifié, éventuellement substitué, possédant 2 à 20 atomes C.

5. Sel selon l'une quelconque des revendications précédentes, le cation étant choisi dans le groupe constitué de (a) cations ammonium quadrivalents comme l'imidazolium, le pyridinium et l'ammonium, (b) cations phosphonium, (c) cations alcali et (d) protons éventuellement solvatés, éventuellement substitués une ou plusieurs fois par des radicaux organiques.

6. Sel selon la revendication 5, le cation étant choisi dans le groupe constitué de l'imidazolium N, N'-substitué, le pyridinium N-substitué et le tétraalkylammonium.

7. Procédé de fabrication d'un sel selon l'une quelconque des revendications précédentes, comprenant les étapes de :
- préparation d'un sel, lequel comporte l'anion ammonioundécahydro-closo-dodécaborate
- substitution par un, deux ou trois atomes d'hydrogène liés à l'azote de l'anion ammonioundécahydro-closo-dodécaborate en convertissant cet anion avec un composé individuel ou différent de la formule R-X,
R étant choisi respectivement dans le groupe constitué de : l'alkyle possédant 1 à 20 atomes C, l'alkylaryle possédant 6 à 20 atomes C et l'aralkyle possédant 6 à 20 atomes C, linéaires ou ramifiés, éventuellement substitués et
X étant un groupe partant approprié.

8. Procédé selon la revendication 7, où X est choisi dans le groupe constitué de Br, CI, 1, toluolsulfonyle, trifluorméthylsulfonyle, sulfate.

9. Procédé selon la revendication 7 ou 8, où le cation dans le sel de l'anion ammonioundécahydro-closo-dodécaborate est un cation alcali.

10. Utilisation d'un anion de formule I 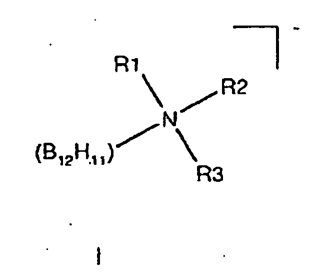 où (B₁₂H₁₁) désigne un agrégat possédant 12 atomes B et 11 atomes H, un ou plusieurs atomes H sont éventuellement remplacés par l'halogène et l'agrégat est lié à l'atome d'azote par un atome B, et
R¹, R², R³ sont choisis indépendamment les uns des autres dans le groupe constitué de l'hydrogène, l'alkyle linéaire ou ramifié, éventuellement substitué, en particulier substitué par un halogène, possédant 1 à 20 atomes C, l'alkylaryle éventuellement substitué, en particulier substitué par un halogène, possédant 6 à 20 atomes C et l'aralkyle éventuellement substitué, en particulier substitué par un halogène, possédant 6 à 20 atomes C
comme anion d'un sel ayant un point de fusion inférieur à 100 °C à 1013 hPa (liquide ionique).

11. Utilisation d'un sel, lequel comporte des anions ammonioundécahydro-closo-dodécaborate, pour fabriquer un sel ayant un point de fusion inférieur à 100 °C à 1013 hPa (liquide ionique).

12. Mélange de différents sels, comportant un ou plusieurs sels selon l'une quelconque des revendications 1 à 6, le mélange possédant un point de fusion inférieur à 100 °C à 1013 hPa.
